# EUROPEAN PATENT APPLICATION

(11) **EP 4 098 444 A1**
(43) Date of publication of application: **07.12.2022**
(21) Application number: 21177479.9
(22) Date of filing: 02.06.2021
(51) Int. Cl.: B33Y 70/00, C09D 11/023, C09D 11/03, C09D 11/101

(54) **CURABLE LIQUID/LIQUID/SOLID MULTIPHASIC SUSPENSIONS**

(71) Applicant: 3M Innovative Properties Company, Saint Paul, MN 55133-3427 (US)
(72) Inventor: Gaide, Tom, 50674 Köln (DE); Ostrowski, Karoline Anna, 40223 Düsseldorf (DE); Semmler, Philipp Jürgen, 22926 Ahrensburg (DE); Eichler, Jens, 41564 Kaarst (DE)
(74) Representative: Mathys & Squire

(57) **Abstract**

The present invention relates to curable compositions comprising a plurality of particles, a primary liquid phase comprising at least one polymerizable or cross-linkable organic compound that can form organic polymers or networks, and a secondary liquid phase.

## Description

### Field of the invention

The present invention relates to curable compositions comprising a plurality of particles, a primary liquid phase comprising at least one polymerizable or cross-linkable organic compound that can form organic polymers or networks, and a secondary liquid phase.

### Background

Technologies allowing the accurate fabrication of articles having complex topographical features on the micro and macroscale, and simultaneously a high degree of flexibility regarding the article's physical, mechanical and chemical properties have gained in importance.

The field of 3D printing technology has evolved due to intense research in recent years. 3D printing via direct ink writing can shape various types of materials (e.g., plastics or metals) by nozzle extrusion processes. The inks for direct writing with polymers mostly contain thermoplastics, which allows hot melt nozzle extrusion followed by rapid cooling and solidification into target shape. The inks can be designed to include different functional components that can influence the properties of the final product.

A disadvantage of hot melt extrusion certainly is the need for significantly elevated temperatures in order to melt the respective polymeric materials used for creation of the three dimensional form, which often results in complicated security measures to protect workers from exposure to molten or hot material. Also, on order to retain a shape as close as possible to the desired printing result measures must be taken that allow for a rapid cooling of the printed product in order to avoid distortions during the cooling process caused by insufficiently cooled, and thus still flowable material. This either limits the choice of possible material, or necessitates a cooling system to influence the cooling process to produce the desired result. Additionally a tight control of the cooling process is required. Thus, 3D printing with elastomeric polymers is difficult.

An alternative approach would be to use curable compositions that can be polymerized after shaping to only then form the desired polymer with its final properties However, such approaches are difficult to follow through, since the problems with dimensional stability persist, in particular if the precursors of the polymers are liquid at ambient conditions. Support structures are usually used to overcome geometrical limitations (e.g. to withstand the influence of gravity in overhangs) and to counter intrinsic material instabilities. While such support structures may improve the stability during and immediately after printing, they have to be removed manually from the final article after polymerization, which requires additional effort.

A large number of industrial products, e.g., inks, are based on suspensions of particles in a primary liquid. The combination of particles in a liquid allows for different properties to be incorporated.

The use of liquid/liquid/solid multiphasic suspensions is one way to control flow properties, physical properties and the microstructure of suspensions. Liquid/liquid/solid multiphasic suspensions have for example been shown as being suitable for use as precursors for articles with high porosity and small pore size, 3D printing formulations, and many more. Such a mixtures can undergo several states. Especially the two capillary suspension states, namely the "capillary state" and the "pendular state", offer a huge potential in controlling these properties. Capillary suspensions can be formed when a small amount of a secondary liquid phase is added that is immiscible with the primary liquid phase containing particles. When the secondary liquid phase either wets the particles much better than the primary liquid phase, or when the secondary liquid phase wets the particles much worse that the primary liquid phase, a network is formed. Apart from an induced or increased yield stress, many other rheological properties, like increased viscosity, is observed for capillary suspensions due to capillary forces induced by the added secondary liquid leading to a percolating particle network by bridging the particles.

EP 2729431 A1 describes the use of capillary suspensions in extrusion-based 3D printing processes to produce porous ceramic parts. CN 110237781 A describes the provision of flexible sensors using capillary suspensions. WO 2018/013779 A1 discloses capillary suspensions for making silicone composites via extrusion-based shaping.

In the article "Capillary suspension: Particle networks formed through capillary force" (E. Koos, Current Opinion in Colloids & Interface Science, 19 (2014) 575-584), capillary suspension, their chemistry, formation and properties is discussed.

The network structure of liquid/liquid/solid multiphasic suspensions is influenced by several factors, such as the particle size, volume fractions of particles and secondary liquid phase, and the three-phase contact angle that captures the wetting behaviour of both liquid phases on the particles. Additionally, the microstructure of liquid/liquid/solid multiphasic suspensions is also strongly influenced by their preparation process.

In contrast to common strategies, the microstructural particle network of liquid/liquid/solid multiphasic suspensions leads to improved properties compared to particles distributed in only one single phase. Additionally, due to the capillary forces no additive is required to stabilize the suspension and prevent the particles from separating.

In the present invention, the concept of liquid/liquid/solid multiphasic systems overcomes the above-mentioned problems with liquid phases comprising polymerizable or cross-linkable starting materials. It improves material properties as well as processing challenges. The microstructure of 3D printed articles is controllable. New or additional features regarding physical, mechanical and/or chemical properties (e.g., thermal or electrical conductivity) can be introduced. The formation of networks further leads to a reduction of the required amount of functional filler due to the conductive pathways through the material, and hence reduce the price and allow printability of the composite. Also, support structures are no longer needed.

### Summary of the invention

The present invention relates to a curable composition comprising
a. 5 to 69.99 vol.-%, based on the total volume of the composition, of a plurality of particles;
b. 30 to 94.99 vol.-%, based on the total volume of the composition, of a primary liquid phase; and
c. 0.01 to 20 vol.-%, based on the total volume of the composition, of a secondary liquid phase,
wherein the particles are insoluble in the primary liquid phase and in the secondary liquid phase at a temperature of 30°C and below,
wherein the primary liquid phase and the secondary liquid phase form separate phases upon mixing at a temperature of 30°C and below, wherein the primary liquid phase comprises at least one polymerizable or cross-linkable organic compound, wherein the polymerizable organic compound can form organic polymers upon polymerization, and the cross-linkable organic compound can form an organic polymer network upon cross-linking.

The present invention further relates to a cured composition obtained by curing the curable composition as described herein

The present invention further relates to an article comprising the cured composition as described herein.

The present invention further relates to a method of making an article comprising
i. providing a curable composition as described herein;
ii. shaping the curable composition;
iii. curing the curable composition; and
iv. optionally, repeating steps ii. and iii.

### Summary of the Figures

Fig. 1 shows the graph of the shear rate / viscosity relation in a two-part suspension and a curable composition.
Fig. 2 shows a viscous but flowable two-part suspension.
Fig. 3 shows a non-flowable liquid/liquid/solid multiphasic suspension.
Fig. 4 shows the extrusion shaping of a liquid/liquid/solid multiphasic suspension.
Fig. 5 shows cured articles made by UV curing of a liquid/liquid/solid multiphasic suspension.
Fig. 6 shows a cured article made by extrusion shaping of a liquid/liquid/solid multiphasic suspension.
Fig. 7 shows a viscous but flowable two-part suspension.
Fig. 8 shows a liquid/liquid/solid multiphasic suspension with no visible flow.
Fig. 9 shows a cured article made by curing a liquid/liquid/solid multiphasic suspension after spreading.

### Detailed description of the invention

The present invention relates to the provision of curable compositions.

A "content" or a "percentage" specified herein and relating to an "amount" is by volume, unless otherwise specified.

The term "nonpolar" as used herein in the context of a substance means that the substance has a low NSO to carbon ratio and is insoluble in water. The "NSO to carbon ratio" of a substance is the ratio of the number of the heteroatoms nitrogen, sulfur and oxygen to the number of carbon atoms in the substance. Preferably, the NSO to carbon ratio is no more than 1:2. It is preferred that a nonpolar substance cannot form hydrogen bridges.

The term "insoluble in water" as used herein means that no more than 1 g of a substance can be dissolved in 1 L water under standard conditions (20°C, 1 bar). Thus, as used herein, an insoluble substance means the substance is insoluble in water.

The term "polar" as used herein in the context of a substance means that the substance has a high NSO to carbon ratio and is soluble in water. Preferably, the NSO to carbon ratio of a polar substance is more than 1:2. This definition includes water and substances that do not comprise any carbon. It is preferred that a polar substance can form hydrogen bridges.

The term "soluble in water" as used herein means that more than 10 g of a substance can be dissolved in 1 L water under standard conditions (20°C, 1 bar). Thus, as used herein, a soluble substance means the substance is soluble in water.

As used herein, an "organic polymer" has a carbon-containing backbone. Accordingly, "organic polymer networks" and "cross-linked organic polymers" also have a carbon-containing backbone.

The term "ambient" means 1 bar in the context of pressure, and 20°C in the context of temperature. Accordingly, "ambient conditions" are 1 bar and 20°C.

As used herein, the terms "primary liquid phase" and "secondary liquid phase" describe the respective phases in their liquid form. That means that the description of their properties relates to temperatures above their melting point. For example, the description of the particles being insoluble in the primary liquid phase "at a temperature of 30°C and below" defines a temperature range of higher than the melting point of the primary liquid phase and 30°C. Accordingly, the description of the particles being insoluble in the secondary liquid phase "at a temperature of 30°C and below" defines a temperature range of higher than the melting point of the secondary liquid phase and 30°C. Accordingly, the description of the primary liquid phase and the secondary liquid phase forming separate phases upon mixing "at a temperature of 30°C and below" defines a temperature range of higher than the melting point of both, the primary liquid phase and the secondary liquid phase, and 30°C.

The present invention relates to a curable composition comprising
a. 5 to 69.99 vol.-%, based on the total volume of the composition, of a plurality of particles;
b. 30 to 94.99 vol.-%, based on the total volume of the composition, of a primary liquid phase; and
c. 0.01 to 20 vol.-%, based on the total volume of the composition, of a secondary liquid phase,
wherein the particles are insoluble in the primary liquid phase and in the secondary liquid phase at a temperature of 30°C and below,
wherein the primary liquid phase and the secondary liquid phase form separate phases upon mixing at a temperature of 30°C and below,
wherein the primary liquid phase comprises at least one polymerizable or cross-linkable organic compound, wherein the polymerizable organic compound can form organic polymers upon polymerization, and the cross-linkable organic compound can form an organic polymer network upon cross-linking.

The curable compositions described herein are liquid/liquid/solid multiphasic suspensions. The addition of small amounts of a secondary liquid phase (which is insoluble in a primary liquid phase) to a suspension of particles in the primary liquid phase can lead to particle bridging and network formation through attractive capillary forces. The rheological properties of the are liquid/liquid/solid multiphasic suspensions are significantly altered compared to a two-component solid/liquid suspension by an increase in viscosity, e.g., from a fluid-like to a gel-like state or from a weak to a strong gel. It may be preferred that the liquid/liquid/solid multiphasic suspensions are capillary suspensions.

Apart from the increased viscosity, other rheological properties, like an induced or increased yield stress, are observed for liquid/liquid/solid multiphasic suspensions due to capillary forces induced by the added secondary liquid phase leading to a percolating particle network by bridging the particles.

The transfer from a two-component solid/liquid suspension to a capillary suspension and the formation of an internal network happens when the secondary liquid phase either wets the particles much better than the primary liquid phase (pendular state), or when the secondary liquid phase wets the particles much worse that the primary liquid phase (secondary state).

The network structure of the liquid/liquid/solid multiphasic suspensions is influenced by several factors, such as the particle size, volume fractions of particles and secondary liquid phase, and the three-phase contact angle that captures the wetting behaviour of both liquid phases on the particles. The three-phase contact angle can be determined by the sessile drop method according to ASTM D7334. Additionally, the microstructure of liquid/liquid/solid multiphasic suspensions is also influenced by their preparation process.

Suitable curable compositions preferably have a viscosity in the range of from 1 to 100 Pa s at a high shear rate of 100 s⁻¹ at 23°C. For example, at a high shear rate of 100 s⁻¹ at 23°C, the viscosity of the curable composition is higher than the viscosity of a two-component solid/liquid suspension, preferably at least 1.5 times higher, more preferably 1.5 to 2.5 times higher. At a low shear rate of 1 s⁻¹ at 23°C, the viscosity of the curable composition can be higher than the viscosity of a two-component solid/liquid suspension, preferably the viscosity is at least doubled, more preferably the viscosity is 5 to 30 times higher. Viscosities are determined at 23°C using an Anton Paar MCR 302 rheometer with a plate-plate geometry with a 25mm plate and a gap of 1mm.

According to the present invention, the curable composition may be curable by UV treatment, thermal treatment, chemical treatment, visible light treatment, electron beam treatment, reactive gas treatment or pH change treatment. It is preferred that the curable composition is UV curable.

According to the present invention, the curable composition comprises a plurality of particles, a primary liquid phase, and a secondary liquid phase.

### Particles

According to the present invention, the curable composition comprises from 5 to 69.99 wt.-% of the particles, based on the total volume of the curable composition. Where less than 5 wt.-% or more than 69.99 wt.-% of particles are used, the stability of the capillary suspension may decrease. For example, from 10 to 59.95 % of particles are comprised in the capillary suspension, more preferably from 20 to 50 wt. %.

The particles may be selected from inorganic filler particles, hollowed particles, porous particles, ceramic particles, polymeric particles, surface-modified particles, metal particles, carbon nanotubes, polymer composite particles, and combinations of two or more thereof. Suitable inorganic fillers are for example metal oxides, metal carbides, metal nitrides, metal carbides and metal phosphates. Preferred hollow particles are glass bubbles, surface modified glass bubbles, coated glass bubbles. Glass bubbles are for example obtainable under the trade designation iM16K from 3M. Suitable ceramics are for example barium titanate, aluminum oxide, boron nitride, zirconia oxide, silicon nitride, silicon carbide. Suitable polymeric particles are for example polyvinylidene fluoride, polytetrafluoroethylene, perfluoroalkoxy alkanes, fluoroelastomers, perfluoroelastomers, polyethylene, polypropylene, polyamide 12, polyamide 11, poylether ether ketone, poly ether ketone, poly ether ketone. Preferred surface-modified particles are particles having a coating, and particles having organic groups on the surface. Organic groups are for example polymerizable groups. For example, surface-modified particles have amino functional groups, or (meth)acrylate functional groups, particles having metal coating or particles having a metal oxide coating. Suitable metal particles are for example silver, iron, steel, copper, nickel, titanium.

The plurality of particles may comprise functional particles, preferably selected from electrically conductive particles, thermally conductive particles, electrically insulating particles, thermally insulating particles, light weight particles, flame retardant particles, toughening particles, water absorption particles, water repellent particles, piezo electric particles, magnetic particles, dielectric particles, and combination of two or more thereof.

Electrically conductive particles are for example metal particles, and carbon black particles. Thermally conductive particles are for example boron nitride particles, graphite particles, aluminum oxide particles, zinc oxide particles, aluminum nitride particles, silver particles, ceramic microspheres. Electrically insulating particles are for example boron nitride particles, talc particles, and amorphous silica coated particles. Thermally insulating particles are for example glass bubbles. Light weight particles are for example hollow particles like glass bubbles. Flame retardant particles are for example alumina trihydrate, magnesium hydroxide, huntite and hydromagnesite. Water absorbing particles are for example sodium polyacrylate, copolymers of polyacrylamide, ethylene maleic anhydride and polyvinyl alcohol. Water repellent particles are for example polyvinylidene fluoride, polytetrafluoroethylene, perfluoroalkoxy alkanes, ethylene-tetrafluoroethylene, fluoroelastomers, perfluoroelastomers. Piezo electric particles are for example polyvinylidene fluoride, poyamides, poyvinylidene chloride, lead zirconate titanate, lead titanate, quartz, potassium niobate, and barium titanate. Magnetic particles are for example iron, nickel, cobalt, and neodymium-iron-boron. Dielectric particles are for example polyvinylidene fluoride, polyethylenylene, polytetrafluoroethylene, ceramics, steatit, aluminum oxide, mica, air-filled particles, barium titanate, titanium oxide, strontium titanate, and zirconium oxide.

According to the present invention, it is preferred that the particles have a particle size d₅₀ of from 0.1 to 250 µm, determined according to DIN EN 725-5, ISO 13320, for example from 0.5 to 100 µm or from 1 to 75 µm, more preferably from 3 to 50 µm. The particle size identifies the largest dimension of the particle.

Where the curable composition is a capillary suspension, it may be preferred that the particle size of the particles is larger than the droplet size of the secondary liquid in the capillary suspension. The droplet size can be determined by light microscopy.

The particles may in principle have any shape. For example, they may be shaped regularly or irregularly, smooth or edgy. Preferably, the particles are generally spherical, rod-shaped or plate-shaped, more preferably generally spherical.

### Primary liquid phase

According to the present invention, the primary liquid phase is comprised in an amount of from 30 to 94.99 vol.-%, based on the total volume of the curable composition, preferably from 40 to 89.95 %.

According to the present invention, the primary liquid phase comprises at least one polymerizable or cross-linkable organic compound. The polymerizable organic compound can form organic polymers upon polymerization, and the cross-linkable organic compound can form an organic polymer network upon cross-linking.

Thus, the polymerizable organic compound forms organic polymers having a carbon-containing backbone upon polymerization, and the cross-linkable organic compound forms an organic polymer network having a carbon-containing backbone upon cross-linking.

Accordingly, since polysiloxanes consist of an inorganic silicon-oxygen backbone optionally with organic groups attached thereto, neither polysiloxanes nor their precursors (e.g., dimethylsilyl compounds like dimethyldichlorosilane) are organic compounds according to the present invention. It may even be preferred that the at least one polymerizable or cross-linkable organic compound is silicon-free. The term "silicon-free" means that the primary liquid phase comprises less than 0.1 wt.-% compounds comprising silicon, preferably less than 0.01 wt.-% or less than 0.001 wt.-%, more preferably 0 %.

Preferably, the polymerizable or cross-linkable organic compounds are selected from the group consisting acrylic-based monomers, methacrylic-based monomers, olefins, vinyl-based monomers, halogenated monomers, epoxy-based monomers, ethylenically unsaturated polymerizable compounds, cross-linkable acrylic-based polymers, cross-linkable methacrylic-based polymers, cross-linkable polyolefins, cross-linkable polyesters, cross-linkable vinyl-based polymers, cross-linkable halogenated polymers, cross-linkable epoxy-based polymers, and combinations of two or more thereof.

The primary liquid phase may comprise at least one of acrylic-based monomers, cross-linkable acrylic-based polymers, methacrylic-based monomers, and cross-linkable methacrylic-based polymers.
Suitable organic compounds are for example DESMA (polyurethane methacrylate obtained as the reaction product of 1,6-diisocyanatohexane with 2-[(2-methacryloyl)oxy]ethyl 6-hydroxyhexanoate and 2-hydroxyethyl methacrylate), Triethylene glycol dimethacrylate (TEGDMA), 2-Hydroxymethylpropyl methacrylate (HPMA), Bisphenol A ethoxylate methacrylate, α-ω-methacrylated copolymer of ethylenoxide/THF, dicyclopentadienyl acrylate, dicyclopentanyl acrylate, dimethyl-1-adamantyl acrylate, cyclohexyl methacrylate, tetrahydrofurfuryl methacrylate, 2-phenoxyethyl methacrylate, butyl methacrylate (e.g., tert-butyl methacrylate or isobutyl methacrylate), benzyl methacrylate, n-propylmethacrylate, 3,3,5-trimethylcyclohexyl methacrylate, butyl-cyclohexylmethacrylate (e.g., cis-4-tert-butyl-cyclohexylmethacrylate, 73/27 trans/cis-4-tert-butylcyclohexylmethacrylate, or trans-4-tert-butylcyclohexyl methacrylate), 2-decahydronapthyl methacrylate, 1-adamantyl acrylate, dicyclopentadienyl methacrylate, dicyclopentanyl methacrylate, isobornyl methacrylate (e.g., D,L-isobornyl methacrylate), dimethyl-1-adamantyl methacrylate, bornyl methacrylate (e.g., D,L-bornyl methacrylate), 3-tetracyclo[4.4.0.1.1]dodecyl methacrylate, 1-adamantyl methacrylate, isobornyl acrylate, tertiary butyl acrylate, 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, neopentylglycol hydroxypivalate diacrylate modified caprolactone, trimethylolpropane triacrylate (e.g., commercially available under the trade designation TMPTA-N from Cytec Industries, Inc. (Smyrna, GA, USA) and under the trade designation SR-351 from Sartomer (Exton, PA, USA)), pentaerythritol triacrylate (e.g., commercially available under the trade designation SR-444 from Sartomer), ethoxylated (3) trimethylolpropane triacrylate (e.g., commercially available under the trade designation SR-454 from Sartomer), ethoxylated (4) pentaerythritol tetraacrylate (e.g., commercially available under the trade designation SR-494 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), and di-trimethylolpropane tetraacrylate (e.g., commercially available under the trade designation SR-355 from Sartomer) and combinations of two or more thereof.

According to the present invention, it is also possible that the primary liquid phase comprises a combination of at least one cross-linkable polymer and at least one monomer, preferably wherein the cross-linkable polymer and the monomer are acrylic-based or methacrylic-based.

The primary liquid phase may comprise further components, in particular nonpolar or polar liquids or solvents. Preferred liquids or solvents are for example alkanes, cycloalkanes, alkenes, alkynes, aromatics, halogenated organic solvents, water, alcohols, polyols, ketones, amines, amide, ethers, acids, bases, esters, sulfoxides, sulfones, fats and oils.

Generally, the particles and the organic compound can have the same chemical basis, e.g., the particles and the organic compound are both acrylic-based, or the particles and the organic compound are both epoxy-based, or the particles and the organic compound are both vinyl-based, although their respective substituents may differ. It is also possible that the particles and the organic compound do not have the same chemical basis, e.g., they are not both acrylic-based, or they are not both vinyl-based. It is preferred according to the present invention that the particles and the primary liquid form a heterogenous system.

It may be preferred that the volume ratio of particles to the first liquid phase is in the range of from 5:94.99 to 69.99:30, preferably from 10:90 to 60:39.99.

### Secondary liquid

According to the present invention, the secondary liquid phase is preferably comprised in an amount of from 0.01 to 20 vol.-%, based on the total volume of the curable composition, preferably from 0.05 to 10 vol.-%.

The secondary liquid phase may generally be any liquid phase that forms two phases with the primary liquid phase at 30°C and below. It may be preferred that the secondary liquid phase is selected from the group consisting of water, alkyl alcohols (e.g., alkyl alcohols with 1 to 4 carbon atoms), polyols, glycerine, carbonate-based solvents (e.g., propylene carbonate), sulfoxides (e.g., dimethyl sulfoxide), sulfones (e.g., sulfolane), cyrene, polar polymerizable liquids, ionic liquids (e.g., 2-hydroxyethylammonium formate, choline acetate, 1-benzyl-3-methylimdiazolium 1,1,2,2-tetrafluoroethanesulfonate, 1-methyl-3-tetradecylimidazolium chloride, 1-ethyl-3-methylimidazolium acetate, trihexyltetradecylphosphonium chloride), , polymerizable ionic liquids(e.g., 1-allyl-3-methylimidazolium bis(trifluoromethylsulfonyl)imide, 1-butyl-3-vinylimidazolium bis(trifluoromethylsulfonyl)imide, 1-ethyl-3-vinylimidazolium bis(trifluoromethylsulfonyl)imide, 1-allyl-3-methylimidazolium chloride, N,N,N,N-Butyldimethylmethacryloyloxyethylammonium bis(trifluoromethanesulfonyl)imide), ..., deep eutectic mixtures (e.g. choline chloride : urea 1:2, choline chloride: malonic acid 1:1, zinc chloride : acetamide 1:3, choline chloride : glycerol 1:2, choline chloride lactic acid 1:2, proline : oxalic acid 3:1, choline chloride : ethylene glycol 1:2; molar ratios), polymerizable deep eutectic mixtures(e.g. choline chloride : acrylic acid 1:2, 1:4, 1:6, tetramethylammonium chloride : acrylic acid 1:2, choline chloride : methacrylic acid 1:2, ethylammonium chloride : acrylic acid 1:1.5 molar ratios) liquids containing dissolved salts (e.g., [2-(Acryloyloxy)ethyl]trimethylammonium chloride solution in water, [2-(Methacryloyloxy)ethyl]trimethylammonium chloride solution in water), non-polar polymerizable liquids (e.g. ethene,1,1,2,2-tetrafluoro-,oxidized,polymd.,reduced,Et esters, reduced, N-[2-[(2-methyl-1-oxo-2-propen-1-yl)oxy]ethyl] carbamates commercially available under the trade designation FLUOROLINK^{®} MD 700 from Solvay, perfluoropolyether-urethane acrylate dissolved in ethylacetate/n-butyl acetate commercially available under the trade deignation FLUOROLINK^{®} AD 1700 from Solvay, 1,1,1,3,3,3-hexafluoroisopropylmethacrylate, 2,2,3,3,4,4,5,5-octafluoropentylmethacrylate, tridecafluorohexylethyl methacrylate, 1H,1H,2H,2H-perfluorooctyl acrylate), non-polar liquids (e.g. reaction product of 1,1,2,3,3,3-hexafluoro-1-methoxy-2- (trifluoromethyl)propane and 1,1,2,2,3,3,4,4,4-nonafluoro-1-methoxybutane commercially available under the trade designation Novec 7100 from 3M, reaction product of 2-(difluoromethyl ethoxy)-1,1,1,2,3,3,3-heptafluoropropane and 1-ethoxy-1,1,2,2,3,3,4,4,4-nonafluorobutane commercially available under the trade designation Novec 7200 from 3M, 1,1,1,2,2,3,4,5,5,5-docafluoro-3-methoxy-4-(trifluoromethyl)pentane commercially available under the trade designation Novec 7300 from 3M, 3-ethoxy-1,1,1,2,3,4,4,5,5,6,6,6-dodecafluoro-2-(trifluoromethyl)-hexane commercially available under the trade designation Novec 7500 from 3M, 1,1,2,2,3,3,3-heptafuoro-N,N-bis(heptafluoropropyl)propane-1-amine commercially available under the trade designation Fluorinert FC-3283 from 3M, reaction product of 1,1,1,2,2,3,3,4,4,5,5,6,6,6-tetradecafluorohexane and 1,1,1,2,2,3,3,4,5,5,5-undecafluoro-4-(trifluoromethyl)pentane commercially available under the trade designation Fluorinert FC-72) or a combination of two or more thereof. Preferably, the secondary liquid comprises water or a polymerizable compound. The secondary liquid may for example be water, or a combination of water with at least one further polar compound, e.g., a combination of water and glycerine or a polymerizable deep eutectic mixture, e.g., choline chloride : acrylic acid 1:2.

Suitable polar polymerizable liquids are for example acrylic acid and methacrylic acid. Suitable ionic liquids are for example salts derived from 1-methylimidazole, i.e., 1-alkyl-3-methylimidazolium salts. Suitable imidazolium cations are for example 1-ethyl-3-methylimidazolium salts (EMIM), 1-butyl-3-methylimidazolium salts (BMIM), 1-octyl-3 methylimidazolium salts (OMIM), 1-decyl-3-methylimidazolium salts (DMIM), 1-dodecyl-3-methylimidazolium salts (docecylMIM), 1-butyl-2,3-dimethylimidazolium (DBMIM), 1,3-di(N,N-dimethylaminoethyl)-2-methylimidazolium (DAMI), and 1-butyl-2,3-dimethylimidazolium (BMMIM). Suitable anions in ionic liquids are for example chloride, flouride, tetrafluoroborate (BF₄⁻), hexafluorophosphate (PF₆⁻), bis-trifluoromethanesulfonimide (NTf₂⁻), trifluoromethanesulfonate (OTf-), dicyanamide (N(CN)₂⁻), hydrogen sulphate (HSO₄⁻), ethyl sulphate (EtOSO₃⁻). Preferred ionic liquids are for example Trioctylmethylammonium bis(trifluoromethylsulfonyl)imide, imidazolium-based N-heterocyclic carbenes such as 1-butyl-3-methylimidazolium chloride and 1-butyl-3-methylimidazolium hexafluorophosphate. Suitable polymerizable ionic liquids are preferably derived from the ionic liquids described above additionally comprising a polymerizable group, preferably an acrylate or methacrylate group. For example a polymerizable liquid can be derived from 1-vinyl-3-butylimidazolium chloride. Suitable deep eutectic liquids are for example mixtures of choline chloride and ethylene glycol, choline chloride and glycerol, and choline chloride and urea. Suitable polymerizable deep eutectic liquids are for example mixtures of acrylic acid/choline chloride Suitable liquids containing dissolved salts are for example water or organics with dissolved salts such as copper sulfate, copper acetate, potassium permanganate,

However, it is also possible that the secondary liquid phase comprises a compound as described above as being suitable as the primary liquid phase, provided that the first and second liquid phase form separate phases. For example, the secondary liquid phase may comprise at least one polymerizable or cross-linkable organic compound as described above as being suitable as the primary liquid phase, e.g., selected from the group consisting acrylic-based monomers, methacrylic-based monomers, olefins, vinyl-based monomers, halogenated monomers, epoxy-based monomers, ethylenically unsaturated polymerizable compounds, cross-linkable acrylic-based polymers, cross-linkable methacrylic-based polymers, cross-linkable polyolefins, cross-linkable polyesters, cross-linkable vinyl-based polymers, cross-linkable halogenated polymers, cross-linkable epoxy-based polymers, and combinations of two or more thereof, provided that the first and second liquid phase form separate phases. For example, the secondary liquid phase may further comprise nonpolar or polar liquids or solvents provided that the first and second liquid phase form separate phases. Preferred liquids or solvents are for example alkanes, cycloalkanes, alkenes, alkynes, aromatics, halogenated organic solvents, ketones, amines, amide, ethers, acids, bases, esters, sulfoxides, sulfones, fats, oils, and combinations of two or more thereof provided that the first and second liquid phase form separate phases.

According to the present invention, the particles are insoluble in the primary liquid phase and in the secondary liquid phase at a temperature of 30°C and below. Thus, at temperatures above 30°C, the particles may be soluble or insoluble in the primary liquid phase and in the secondary liquid phase, preferably insoluble. At temperatures below the melting point of the first liquid phase, the first phase is in the solid state and forms a heterogeneous mixture with the particles. At temperatures below the melting point of the second liquid phase, the second phase is in the solid state and forms a heterogeneous mixture with the particles.

According to the present invention, the primary liquid phase and the secondary liquid phase form separate phases upon mixing at a temperature of 30°C and below. Thus, at temperatures above 30°C, the primary liquid phase and the secondary liquid phase may form separate phases upon mixing or may form a homogeneous phase. At temperatures below the melting point of both, the primary liquid phase and the second liquid phase, both phases are in the solid state and form a heterogeneous mixture.

Preferably, the primary liquid phase is insoluble in the secondary liquid phase at a temperature of 30°C and below, and the secondary liquid phase is insoluble in the primary liquid phase at a temperature of 30°C and below. Thus, at temperatures above 30°C, the primary liquid phase may be soluble or insoluble in the secondary liquid phase, preferably insoluble; and the secondary liquid phase may be soluble or insoluble in the primary liquid phase, preferably insoluble. At temperatures below the melting point of the first liquid phase, the first phase is in the solid state and forms a heterogeneous mixture with the second phase. At temperatures below the melting point of the second liquid phase, the second phase is in the solid state and forms a heterogeneous mixture with the primary phase.

It may be preferred that the volume ratio of particles to the second liquid phase is in the range of from 1:4 to 69.99:0.01, preferably from 10:5 to 60:0.1.

According to the present invention, one of the primary or secondar liquid phase may be polar, while the other one is nonpolar. For example, the primary liquid phase is nonpolar and the secondary liquid phase is polar. For example, the primary liquid phase is polar and the secondary liquid phase is nonpolar. It is also possible that the primary liquid phase is polar and the secondary liquid phase is polar. It is also possible that the primary liquid phase is nonpolar and the secondary liquid phase is nonpolar. It may be preferred that the primary liquid phase is nonpolar and the secondary liquid phase is polar.

According to the present invention, the primary liquid phase comprises at least one polymerizable or cross-linkable organic compound. It may be preferred that the primary and the secondary liquid phase comprises at least one polymerizable or cross-linkable organic compound.

According to the present invention, the curable composition may further comprise a curing or cross-linking agent. Curing agents according to the present invention allow for or facilitate the polymerization reaction of the polymerizable organic compounds. Accordingly, cross-linking agents allow for or facilitate the cross-linking reaction of the cross-linkable organic compounds. They encompass for example photo initiators, and heat initiators.

Suitable curing agents and cross-linking agents are for example phosphine oxides, in particular monoacyl phosphine oxides and bisacyl phosphine oxides, α-hydroxyketones, α-aminoketones, phenylglyoxylates, benzophenone, sulfonium salts, oxime esters, photoacid generators, onium salts, in particular iodonium and sulfonium salts, peroxides.

Preferably, the curable composition comprises a UV photo initiator. Preferred UV photo initiators are phosphine oxides, in particular monoacyl phosphine oxides and bisacyl phosphine oxides, more preferably phenylbis(2,4,6-trimethylbenzoyl)phosphine oxide (Irgacure 819).

It may be preferred that the curing agent or crosslinking agent is comprised in an amount of from 0.01 to 10 wt.-%, more preferably from 0.1 to 5 wt.-%, based on the total amount of the primary liquid phase.

The curable composition may further comprise at least one further component, preferably selected from the group consisting of stabilizers, UV absorbers, inhibitors, pigments, dyes, plasticizers, modifiers, fillers, and combinations of two or more thereof.

The present invention relates to a cured composition obtained by curing the curable composition as described above.

Preferred features described for the curable composition, the particles, the primary liquid phase and the secondary liquid phase in the context of the curable composition are also preferred in the context of cured composition.

The curable composition can for example be cured by UV treatment, thermal treatment, chemical treatment, visible light treatment, electron beam treatment, reactive gas treatment or pH change treatment. UV curing is preferred.

The present invention relates to an article comprising the cured composition as described above.

Preferred features described for the cured composition, the curable composition, the particles, the primary liquid phase and the secondary liquid phase in the context of the cured composition are also preferred in the context of the article.

The present invention relates to a method of making an article. The method comprises
i. providing a curable composition as described above;
ii. shaping the curable composition;
iii. curing the curable composition; and
iv. optionally, repeating steps ii. and iii.

Preferred features described for the curable composition, the particles, the primary liquid and the secondary liquid in the context of the article are also preferred in the context of the method of making the article.

While it is in general possible to make the article with support structures, it is not necessary when using the process according to the present invention. Thus, it may be preferred that the article is made in the absence of support structures.

According to the present invention, the curable composition is shaped. Generally, all shapes are available to this process. The shaping can for example be made by casting, 3D printing, molding, extrusion, coating, and making a film.

According to the present invention, the curable composition is cured to provide the article.

The shaped curable composition can for example be cured by UV treatment, thermal treatment, chemical treatment, visible light treatment, electron beam treatment, reactive gas treatment or pH change treatment. UV curing is preferred.

It is possible according to the invention that the method is carried out discontinuously. For example, the curable composition is shaped, followed by curing the shaped composition to provide the article. As an alternative example, the curable composition is shaped and cured to provide part of the article, followed by repeating these steps to provide the article. As an alternative example, the curable composition is cured during shaping, i.e., steps ii. and iii. are carried out simultaneously, to provide part of the article, followed by repeating these steps to provide the article. For example, when making a multilayer article (e.g., a multilayer film or a multilayer coating), it may be preferred to shape and cure the layers successively.

It is also possible that the method is carried out continuously. For example, the curable composition is cured during shaping, i.e., steps ii. and iii. are carried out simultaneously, to provide the article. For example, when making an article by extrusion, it may be preferred that the curable composition is cured when leaving the extruder.

### Exemplary Embodiments

A. A curable composition comprising
   a. 5 to 69.99 vol.-%, based on the total volume of the composition, of a plurality of particles;
   b. 30 to 94.99 vol.-%, based on the total volume of the composition, of a primary liquid phase; and
   c. 0.01 to 20 vol.-%, based on the total volume of the composition, of a secondary liquid phase,
   wherein the particles are insoluble in the primary liquid phase and in the secondary liquid phase within a temperature range of from -20°C to 30°C,
   wherein the primary liquid phase and the secondary liquid phase form separate phases upon mixing within a temperature range of from -20°C to 30°C,
   wherein the primary liquid phase comprises at least one polymerizable or cross-linkable organic compound, wherein the polymerizable organic compound can form organic polymers upon polymerization, and the cross-linkable organic compound can form an organic polymer network upon cross-linking.
B. The curable composition according to embodiment A, wherein the curable composition is UV curable.
C. The curable composition according to any one of the preceding embodiments, wherein the curable composition is a capillary suspension.
D. The curable composition according to any one of the preceding embodiments, wherein the polymerizable organic compound forms organic polymers having a carbon-containing backbone upon polymerization, and wherein the cross-linkable organic compound forms an organic polymer network having a carbon-containing backbone upon cross-linking.
E. The curable composition according to any one of the preceding embodiments, wherein the at least one polymerizable or cross-linkable organic compound is selected from acrylic-based monomers, methacrylic-based monomers, olefins, vinyl-based monomers, halogenated monomers, epoxy-based monomers, cross-linkable acrylic-based polymers, cross-linkable methacrylic-based polymers, cross-linkable polyolefins, cross-linkable polyesters, cross-linkable vinyl-based polymers, cross-linkable halogenated polymers, cross-linkable epoxy-based polymers, or combinations of two or more thereof.
F. The curable composition according to any one of the preceding embodiments, wherein the at least one polymerizable or cross-linkable organic compound is silicon-free.
G. The curable composition according to any one of the preceding embodiments, wherein the primary liquid phase comprises at least one of acrylic-based monomers, cross-linkable acrylic-based polymers, methacrylic-based monomers, and cross-linkable methacrylic-based polymers.
H. The curable composition according to any one of the preceding embodiments, wherein the polymer composition comprises a combination of at least one cross-linkable polymer and at least one monomer, preferably wherein the cross-linkable polymer and the monomer are acrylic-based or methacrylic-based.
I. The curable composition according to any one of the preceding embodiments, wherein the primary liquid phase is comprised in an amount of from 40 to 89.95 vol.-%, based on the total volume of the curable composition.
J. The curable composition according to any one of the preceding embodiments, wherein the secondary liquid phase is comprised in an amount of from 0.05 to 10 vol.-%, based on the total volume of the curable composition.
K. The curable composition according to any one of the preceding embodiments, wherein the secondary liquid phase is selected from the group consisting of water, alkyl alcohols, polyols, glycerine, carbonate-based solvents, sulfoxides, sulfones, cyrene, polar polymerizable liquids, ionic liquids, polymerizable ionic liquids, deep eutectic mixtures, polymerizable deep eutectic mixtures, liquids containing dissolved salts, or a combination of two or more thereof.
L. The curable composition according to any one of the preceding embodiments, wherein the secondary liquid phase comprises water.
M. The curable composition according to any one of the preceding embodiments, wherein the particles are comprised in an amount of from 10 to 59.95 vol.-%, based on the total volume of the curable composition.
N. The curable composition according to any one of the preceding embodiments, wherein the particles are selected from inorganic filler particles, hollowed particles, porous particles, ceramic particles, polymeric particles, surface-modified particles, metal particles, carbon nanotubes, polymer composite particles, and combinations of two or more thereof.
O. The curable composition according to any one of the preceding embodiments, wherein the particles comprise functional particles, preferably selected from electrically conductive particles, thermally conductive particles, electrically insulating particles, thermally insulating particles, electromagnetic wave-altering particles, light weight particles, flame retardant particles, toughening particles, water absorption particles, water repellent particles, piezo electric particles, magnetic particles, dielectric particles, and combination of two or more thereof.
P. The curable composition according to any one of the preceding embodiments, wherein the particles have a particle size d₅₀ of from 0.05 to 500 µm, preferably 0.5 to 50 µm.
Q. The curable composition according to any one of the preceding embodiments, wherein the particle size of the particles is larger than the droplet size of the secondary liquid phase in the curable composition.
R. The curable composition according to any one of the preceding embodiments additionally comprising a curing or cross-linking agent, preferably a UV photo initiator.
S. The curable composition according to any one of the preceding embodiments additionally comprising at least one further component, preferably selected from the group consisting of stabilizers, pigments, dyes, plasticizers, modifiers, fillers, and combinations of two or more thereof.
T. A cured composition obtained by curing the curable composition according to any one of the preceding embodiments.
U. An article comprising the cured composition according to embodiment T.
V. A method of making an article comprising
   i. providing a curable composition according to any one of embodiments A to S;
   ii. shaping the curable composition;
   iii. curing the curable composition; and
   iv. optionally, repeating steps ii. and iii.

### Examples

### Example 1

### 1. Preparation of a curable composition

### a. Primary liquid phase

50 g of the following reagents were added into a container suitable for a speed mixer:
13.3 wt.-% DESMA (3M St. Paul, MN), polyurethane methacrylate obtained as the reaction product of reaction product of 1,6-diisocyanatohexane with 2-[(2-methacryloyl)oxy]ethyl 6-hydroxyhexanoate and 2-hydroxyethyl methacrylate)
38.0 wt.-% Triethylene glycol dimethacrylate (TEGDMA, obtained from Merck, Darmstadt, Germany)
8.4 wt.-% Hydroxymethylpropyl methacrylate (
Mixture of hydroxypropyl and hydroxyisopropyl methacrylates, obtained from Merck, Darmstadt, Germany))
38.0 wt.-% Bisphenol A ethoxylate methacrylate (BisEMA-4/SR540, Mn 540, obtained from Sartomer, Colombes, France)
2.3 wt.-% α-ω-methacrylated copolymer of ethylenoxide/THF (Diol6000-DMA, Mw about 6,000, 3M St. Paul, MN)

The components were mixed in a speed mixer at 1400 rpm for 90 s.

This mixture is the primary liquid phase which creates a two-phase system with water.

### b. First suspension

21.4 g (46.5 mL) glass bubbles (iM16K, 3M, St. Paul, MN) were added to 50 g (48mL) of the primary liquid phase and mixed in a speed mixer at 1400 rpm for 90 s.

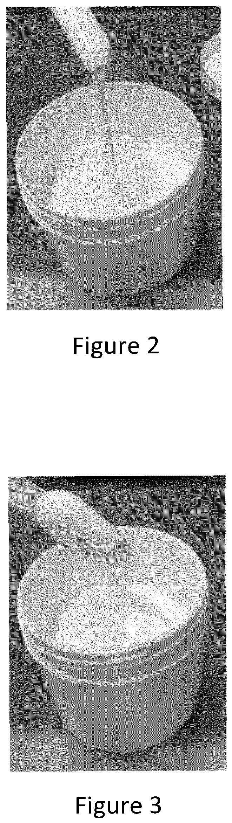

A viscous but flowable solution was obtained (see Figure 2).

### c. Liquid/liquid/solid multiphasic system

2.126 g (2.126 mL) water was added to 71.4 g (94.5 mL) of the first suspension and mixed in a speed mixer at 1400 rpm for 90 s.

A paste with no visible flow was obtained (see Figure 3).

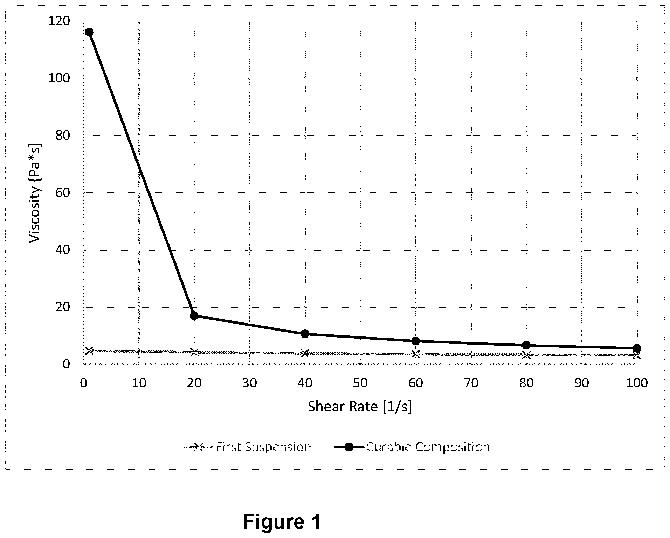

The viscosities at 23°C of the first suspension and the liquid/liquid/solid multiphasic suspension are quantified in table 1 for different shear rates and shown in Figure 1. The viscosities are determined using an Anton Paar Modular Compact Rheometer MCR302 with a plate-plate geometry with a 25mm plate and a gap of 1mm.

**Table 1**

| Shear rate [s⁻¹] | Viscosity (first suspension) [Pa*S] | Viscosity (liquid/liquid/solid multiphasic suspension) [Pa*S] |
|---|---|---|
| 1 | 4.7 | 116.2 |
| 20 | 4.2 | 17.0 |
| 40 | 3.8 | 10.6 |
| 60 | 3.5 | 8.1 |
| 80 | 3.3 | 6.6 |
| 100 | 3.2 | 5.6 |

0.504 g Phenylbis(2,4,6-trimethylbenzoyl)phosphine oxide (Irgacure 819 / Omnirad 819, IGM Resins, Waalwijk, Netherlands ) was added as a curing agent and mixed within a speed mixer at 1400 rpm for 90 s.

A slightly yellow curable composition with no visible flow was obtained.

### 2. Shaping via a syringe

The curable composition was filled into a 5 mL syringe with a 1.2 mm cannula.

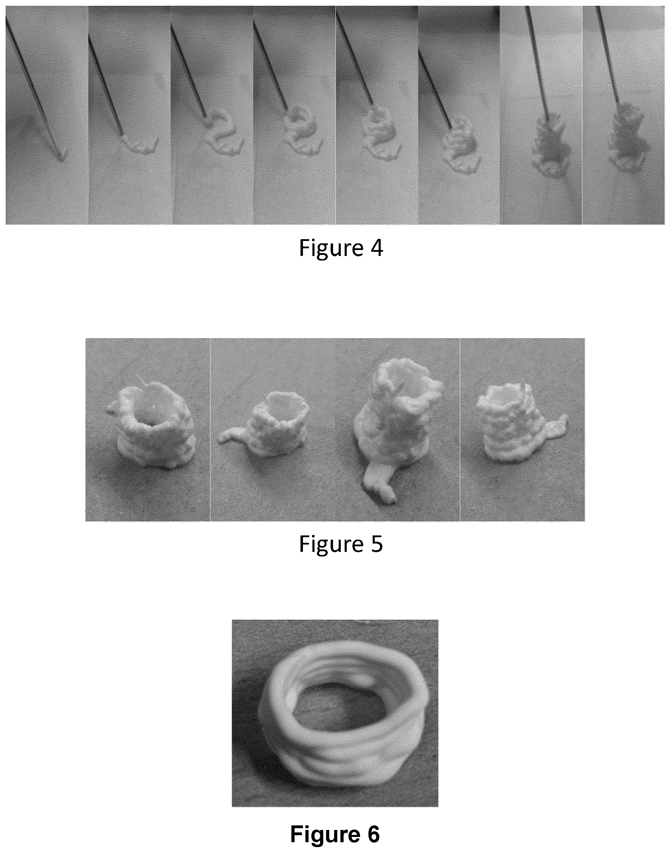

The curable composition was squeezed out of the syringe and extrusion printed by hand (see Figure 4).

### 3. UV curing

The shaped curable composition was cured in a UV curing chamber from Rapid Shape (RS cure, curing parameter: both wavelengths at full power for 1200 s under vacuum) to provide an article.

Figure 5 shows a 360° view of the article.

### Example 2

### 1. Preparation of a curable composition

### a. Primary liquid phase

The primary liquid was made as described in Example 1.

### b. First suspension

10 g (8.9 mL) glass bubbles with a density of 1.12 g/cm³ were added to 10 g (9.6 mL) of the primary liquid phase and mixed in a speed mixer at 1400 rpm for 90 s.

A flowable solution was obtained.

### c. Liquid/liquid/solid multi-phasic system

0.4 g (0.27 mL) Fluorolink^{®} MD700 (cas no. 1385773-87-4; SOLVAY SPECIALTY POLYMERS ITALY S.p.A.) was added to the first suspension and mixed in a speed mixer at 1400 rpm for 90 s.

Fluorolink^{®} MD700 has a molecular weight of 1600 Da with the chemical formula

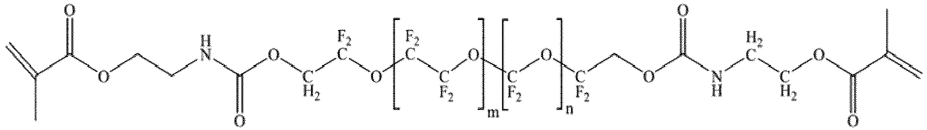

A paste with no visible flow was obtained.

0.2 g Phenylbis(2,4,6-trimethylbenzoyl)phosphine oxide (Irgacure 819/ Omnirad 819) was added as a curing agent and mixed within a speed mixer at 1400 rpm for 90 s.

A slightly yellow curable paste with no visible flow was obtained.

### 2. Shaping via a syringe

The curable composition was filled into a 5 mL syringe with a 1.2 mm cannula.

The curable composition was squeezed out of the syringe and extrusion printed by hand.

### 3. UV curing

The shaped curable composition was cured in a UV curing chamber from Rapid Shape (RS cure, curing parameter: both wavelengths at full power for 1200 s under vacuum) to provide an article (see Figure 6).

### Example 3

### 1. Preparation of a curable composition

### a. Primary liquid phase

The primary liquid was made as described in Example 1.

### b. First suspension

5 g (2.3 mL) glass bubbles iM16K and 0.1 g Phenylbis(2,4,6-trimethylbenzoyl)phosphine oxide (Irgacure 819/ Omnirad 819) were added to the primary liquid phase, and mixed in a speed mixer at 1400 rpm for 30 s and at 2000 rpm at 400 mbar for 90 s.

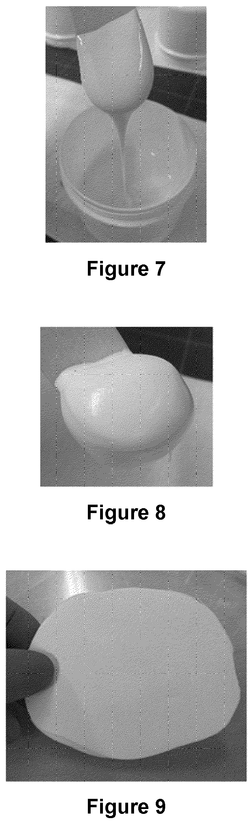

A flowable solution was obtained as the first suspension (see Figure 7).

### c. Liquid/liquid/solid multi-phasic system

72.6 g Acrylic Acid and 69.8 g Choline Chloride (both obtained from Merck, Darmstadt, Germany) were mixed and heated to 90°C in a glass vessel under air atmosphere for 4 h. A clear liquid is obtained as the secondary liquid phase.

0.4 mL of the secondary liquid phase were added to the first suspension and mixed in a speed mixer at 1400 rpm for 30 s and 2000 rpm at 400 mbar for 90 s. The mixture was allowed to rest for 72 h.

A viscous UV curable paste was obtained (see Figure 8).

### 2. Shaping

The curable composition was shaped by spreading the composition.

### 3. UV curing

The shaped curable composition was UV cured in a UV curing chamber from Rapid Shape (RS cure, curing parameter: both wavelengths at full power for 1200 s under vacuum) to provide a composite material (see Figure 9).

## Claims

1. A curable composition comprising
a. 5 to 69.99 vol.-%, based on the total volume of the composition, of a plurality of particles;
b. 30 to 94.99 vol.-%, based on the total volume of the composition, of a primary liquid phase; and
c. 0.01 to 20 vol.-%, based on the total volume of the composition, of a secondary liquid phase,
wherein the particles are insoluble in the primary liquid phase and in the secondary liquid phase within a temperature range of from -20°C to 30°C,
wherein the primary liquid phase and the secondary liquid phase form separate phases upon mixing within a temperature range of from -20°C to 30°C,
wherein the primary liquid phase comprises at least one polymerizable or cross-linkable organic compound, wherein the polymerizable organic compound can form organic polymers upon polymerization, and the cross-linkable organic compound can form an organic polymer network upon cross-linking.

2. The curable composition according to claim 1, wherein the curable composition is UV curable.

3. The curable composition according to any one of the preceding claims, wherein the polymerizable organic compound forms organic polymers having a carbon-containing backbone upon polymerization, and wherein the cross-linkable organic compound forms an organic polymer network having a carbon-containing backbone upon cross-linking.

4. The curable composition according to any one of the preceding claims, wherein the primary liquid phase comprises at least one of acrylic-based monomers, cross-linkable acrylic-based polymers, methacrylic-based monomers, and cross-linkable methacrylic-based polymers.

5. The curable composition according to any one of the preceding claims, wherein the polymer composition comprises a combination of at least one cross-linkable polymer and at least one monomer, preferably wherein the cross-linkable polymer and the monomer are acrylic-based or methacrylic-based.

6. The curable composition according to any one of the preceding claims, wherein the primary liquid phase is comprised in an amount of from 40 to 89.95 vol.-%, based on the total volume of the curable composition.

7. The curable composition according to any one of the preceding claims, wherein the secondary liquid phase is comprised in an amount of from 0.05 to 10 vol.-%, based on the total volume of the curable composition.

8. The curable composition according to any one of the preceding claims, wherein the particles are comprised in an amount of from 10 to 59.95 vol.-%, based on the total volume of the curable composition.

9. The curable composition according to any one of the preceding claims, wherein the particles comprise functional particles, preferably selected from electrically conductive particles, thermally conductive particles, electrically insulating particles, thermally insulating particles, electromagnetic wave-altering particles, light weight particles, flame retardant particles, toughening particles, water absorption particles, water repellent particles, piezo electric particles, magnetic particles, dielectric particles, and combination of two or more thereof.

10. The curable composition according to any one of the preceding claims, wherein the particles have a particle size d₅₀ of from 0.05 to 500 µm, preferably 0.5 to 50 µm.

11. The curable composition according to any one of the preceding claims additionally comprising a curing or cross-linking agent, preferably a UV photo initiator.

12. The curable composition according to any one of the preceding claims additionally comprising at least one further component, preferably selected from the group consisting of stabilizers, pigments, dyes, plasticizers, modifiers, fillers, and combinations of two or more thereof.

13. A cured composition obtained by curing the curable composition according to any one of the preceding claims.

14. An article comprising the cured composition according to claim 13.

15. A method of making an article comprising
i. providing a curable composition according to any one of claims 1 to 12;
ii. shaping the curable composition;
iii. curing the curable composition; and
iv. optionally, repeating steps ii. and iii.
